(19) Europäisches Patentamt
European Patent Office
Office européen des brevets

(11) **EP 3 346 601 A1**

(12) **EUROPEAN PATENT APPLICATION**

(43) Date of publication:
**11.07.2018 Bulletin 2018/28**

(21) Application number: **18150384.8**

(22) Date of filing: **04.01.2018**

(51) Int Cl.:
*H02P 6/17* (2016.01)  *H02K 29/08* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **06.01.2017 US 201762443138 P
19.12.2017 US 201715846814**

(71) Applicant: **Honeywell International Inc.
Morris Plains, NJ 07950 (US)**

(72) Inventor: **STRONG, Ronald E.
Morris Plains, NJ 07950 (US)**

(74) Representative: **Houghton, Mark Phillip
Patent Outsourcing Limited
1 King Street
Bakewell, Derbyshire DE45 1DZ (GB)**

(54) **SYSTEM AND METHOD FOR CONTROLLING A BRUSHLESS MOTOR**

(57)     A system and method for controlling a permanent magnet brushless motor is provided. The system, for example, may include, but is not limited to, at least one Hall effect sensor configured to generate data at each Hall effect event, and a processor communicatively coupled to the at least one Hall effect sensor, the processor configured to determine, aperiodically at each Hall effect event, an angular rate of the permanent magnet brushless motor and a determined angular rate correction factor based upon the generated data, determine, periodically at a predetermined frequency, a new estimated electrical position of the permanent magnet brushless motor based upon the determined angular rate of the permanent magnet brushless motor and the determined angular rate correction factor, and generate, periodically at the predetermined frequency, a field oriented control signal for the permanent magnet brushless motor based upon the new estimated electrical position of the permanent magnet brushless motor.

FIG. 1
100

EP 3 346 601 A1

**Description**

TECHNICAL FIELD

The present disclosure generally relates to a motor control, and more particularly relates to systems and methods for controlling brushless motors.

BACKGROUND

Brushless motor designs have numerous advantages over brushed motor designs. For example, brushless motor designs typically have a higher torque to weight ratio, more torque per watt (increased efficiency), increased reliability, reduced noise, longer lifetime (no brush and commutator erosion), eliminate ionizing sparks from the commutator, and overall have reduction of electromagnetic interference (EMI) when compared to brushed motor designs. Furthermore, with no windings on the rotor, brushless motors are not subjected to centrifugal forces, brushless motor designs can be cooled by conduction and brushless motor designs require no airflow inside the motor for cooling.

Fine motor control of a brushless motor, however, can be more complicated than brushed motor designs. Some brushless motor designs will use a resolver for fine motor control. However, resolvers can be costly in both weight and price.

BRIEF SUMMARY

In one embodiment, for example, a system for controlling a permanent magnet brushless motor is provided. The system may include, but is not limited to, at least one Hall effect sensor mounted proximate to the permanent magnet brushless motor and configured to generate data at each Hall effect event, the Hall effect event comprising a pole of the permanent magnet brushless motor passing one of the at least one Hall effect sensors, and a processor communicatively coupled to the at least one Hall effect sensor, the processor configured to determine, aperiodically upon detection of each Hall effect event, a sampled angular rate of the permanent magnet brushless motor, determine, aperiodically upon detection of each Hall effect event, a sampled electrical position of the permanent magnet brushless motor, determine, aperiodically upon detection of each Hall effect event, a previous estimated electrical position of the permanent magnet brushless motor, determine, aperiodically upon detection of each Hall effect event, an electrical position error comprising a difference between the sampled electrical position of the permanent magnet brushless motor and the previous estimated electrical position of the permanent magnet brushless motor, determine, aperiodically upon detection of each Hall effect event, an angular rate correction factor comprising the determined electrical position error multiplied by a predetermined gain, determine, periodically at a predetermined frequency, a new estimated electrical position of the permanent magnet brushless motor based upon the sampled angular rate of the permanent magnet brushless motor and the determined angular rate correction factor, and generate, periodically at the predetermined frequency, a field oriented control signal for the permanent magnet brushless motor based upon the new estimated electrical position of the permanent magnet brushless motor.

In another embodiment, for example, a method for controlling a permanent magnet brushless motor is provided. The method includes, but is not limited to, determining, by a processor, an angular rate of the permanent magnet brushless motor aperiodically at each Hall effect event detected by a Hall effect sensor based upon data from the Hall effect sensor, determining, by the processor, an angular rate correction factor aperiodically at each Hall effect event detected by the Hall effect sensor based upon the data from the Hall effect sensor, determining, by the processor, a new estimated electrical position of the permanent magnet brushless motor periodically at a predetermined frequency based upon the determined angular rate of the permanent magnet brushless motor and the determined angular rate correction factor, and generating, by the processor, a field oriented control signal for the permanent magnet brushless motor based upon the new estimated electrical position of the permanent magnet brushless motor periodically at the predetermined frequency.

In another embodiment, for example, a system for controlling a permanent magnet brushless motor is provided. The system may include, but is not limited to, at least one Hall effect sensor mounted proximate to the permanent magnet brushless motor and configured to generate data at each Hall effect event, and a processor communicatively coupled to the at least one Hall effect sensor, the processor configured to determine, aperiodically at each Hall effect event, an angular rate of the permanent magnet brushless motor and a determined angular rate correction factor based upon the generated data, determine, periodically at a predetermined frequency, a new estimated electrical position of the permanent magnet brushless motor based upon the determined angular rate of the permanent magnet brushless motor and the determined angular rate correction factor, and generate, periodically at the predetermined frequency, a field oriented control signal for the permanent magnet brushless motor based upon the new estimated electrical position of the permanent magnet brushless motor.

BRIEF DESCRIPTION OF THE DRAWINGS

The detailed description will hereinafter be described in conjunction with the following drawing figures, wherein like numerals denote like elements, and wherein:

FIG. 1 is a block diagram illustrating a control system for a brushless motor, in accordance with an embodiment; and

FIG. 2 illustrates a method for controlling a brushless motor, in accordance with an embodiment.

DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

In accordance with an embodiment, a system and method for controlling a brushless motor is provided. The system and method provide fine (i.e., accurate) control of the brushless motor at a lower cost and less weight than designs that utilize resolvers. As discussed in further detail below, data from Hall effect sensors are utilized by the system and method to accurately control the brushless motor.

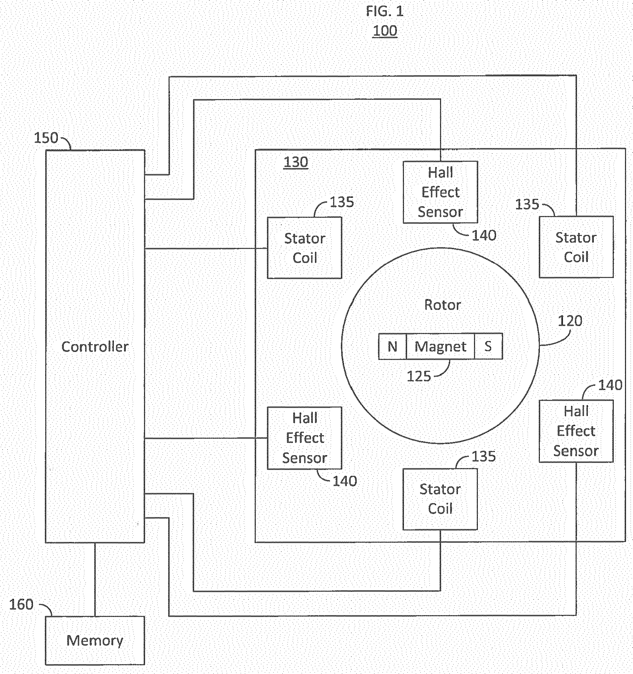

FIG. 1 is a block diagram illustrating a control system 100 for a brushless motor 110, in accordance with an embodiment. The brushless motor 110 includes a rotor 120 and a stator 130. The rotor 120 includes at least one permanent magnet 125 having a north pole N and a south pole S. While FIG. 1 illustrates the rotor 120 as including one permanent magnet 125, any number of permanent magnets 125 could be used. As a brushless motor 110, the rotor 120 is configured to rotate without having any direct physical connection with the stator 130.

The stator 130 includes at least one stator coil 135. While FIG. 1 illustrates the stator 130 as including three stator coils 135, any number of stator coils 135 could be used. Furthermore, the positioning of the stator coils can vary. In other words, while FIG. 1 illustrates three stator coils 135 evenly spaced around the rotor 120, the positioning and space between the stator coils 135 can vary. When an electric current is induced on the stator coil(s) 135, a magnetic field is produced by the stator coil(s) 135. This magnetic field interacts with the permanent magnet(s) 125 of the rotor 120 causing the rotor 120 to rotate.

FIG. 1 illustrates an inner-rotor configuration for a brushless motor 110 with the rotor 120 spinning inside of the stator 130. However, the control system 100 could also be used to control external-rotor (otherwise known as outer-rotor) configured brushless motors. In external rotor configurations, the stator 130 of the brushless motor 110 is fixed within the middle of the brushless motor 110 and the rotor 120 with the permanent magnets 125 rotate around the stator 130.

The control system 100 includes at least one Hall effect sensor 140 and a controller 150. As seen in FIG. 1, each Hall effect sensor 140 is arranged on the stator 130. Each Hall effect sensor 140 is a transducer that varies its output voltage in response to a magnetic field. Accordingly, as the rotor 120 rotates, the magnetic field of the permanent magnet(s) 125 cause the output voltage of the Hall effect sensor(s) to vary. As discussed in further detail below, the controller 150 utilizes the voltage output by the Hall effect sensor(s) 140 to control the rotation of the rotor 120.

While FIG. 1 illustrates three Hall effect sensors 140, any number of Hall effect sensors 140 could be used. In the embodiment illustrated in FIG. 1, the Hall effect sensors are physically spaced apart such that the Hall effect sensors 140, which can detect both a north and a south pole of the magnet 125, can detect an electrical position of the rotor 120 every sixty degrees. In other words, each time the rotor physically rotated sixty degrees, a north or south pole of the permanent magnet 125 would pass by one of the Hall effect sensors 140. The circuitry of each Hall effect sensor 140 detects whether there is a north or south pole in front of it. One electrical revolution (or 360 electrical degrees) consists of a north and south pole passing. The control system 100 uses the transition from north-south and south-north as known locations. These happen twice per electrical revolution (or one hundred eighty electrical degrees). In a three phase motor, for example, the Hall effect sensor 140 may be spaced one hundred twenty electrical degrees apart. Each Hall effect sensor 140 can read the N north-south and south-north transitions. Accordingly with three phases the control system 100 can read every a position every sixty electrical degrees. Accordingly, even though the Hall effect sensors 140 are illustrated as being separated by one-hundred twenty electrical degrees, the Hall effect sensor 140 transitions occur every sixty degrees. Achieving sixty degree electrical positioning capabilities can be achieved with a variety of physical (mechanical) positioning of the Hall effect sensors 140.

Furthermore, the number of permanent magnets 125 and the number of Hall effect sensors 140 can affect the electrical spacing of the Hall effect sensors 140, and, thus, the granularity of the system. For example, if the rotor 120 in FIG. 1 included sixteen magnets (i.e., a sixteen pole motor) and three Hall effect sensors, the mechanical spacing between the Hall effect sensors would be 15 degrees (i.e., a system with three Hall effect sensors and sixteen magnets would be able to determine the electrical position of the rotor every time the rotor rotated 15 mechanical degrees). In this example, with sixteen evenly spaced magnets, the Hall effect sensors 140 would not be able to determine a fine physical orientation of the rotor 120 as the Hall effect sensors could not distinguish higher resolution position in-between the sixteen evenly spaced magnets. However, as the system accurately would know where the permanent magnets 125 of rotor were every time the rotor 120 rotates sixty electrical degrees, the system can effectively control the rotational speed of the rotor 120, as discussed in further detail below.

In the example illustrated in FIG 1, as each permanent magnet 125 includes both a north and south pole, the system 100 with three Hall effect sensors 140 can detect magnetic pole transitions every sixty degrees, or six times per every revolution of the rotor 120. In one embodiment, for example, the Hall effect sensors 140 will output a one if there is a north pole in front of the sensor and a zero if there is a south pole in front of the sensor. These magnetic pole transitions are hereinafter referred to as Hall effect events. Traditional control systems utilizing Hall effect sensors only update the commutation position for motors upon detection of each Hall effect event. Accordingly, traditional systems which utilize Hall effect sensors do not have fine motor control as they only update commutation at each Hall event. One benefit of the control system 100 discussed herein is that the control system 100 provides motor control signals between Hall effect events, thereby providing fine motor control for the brushless motor 110 without requiring more expensive and heavier equipment, such as resolvers or the like.

The controller 150 includes at least one processor. The processor(s) may be, for example, a central processing unit (CPU), a physics processing unit (PPU), a graphics processing unit (GPU), a field programmable gate array (FPGA), an application specific integrated circuit (ASIC), a microcontroller, or any other logic unit or combination thereof.

The controller 150 may include a memory 160 or be communicatively coupled to a separate memory 160 via a communication bus. The memory 160 may be any combination of volatile and non-volatile memory. The memory 160 may store non-transitory computer readable instructions for operating the control system 100, as discussed in further detail below.

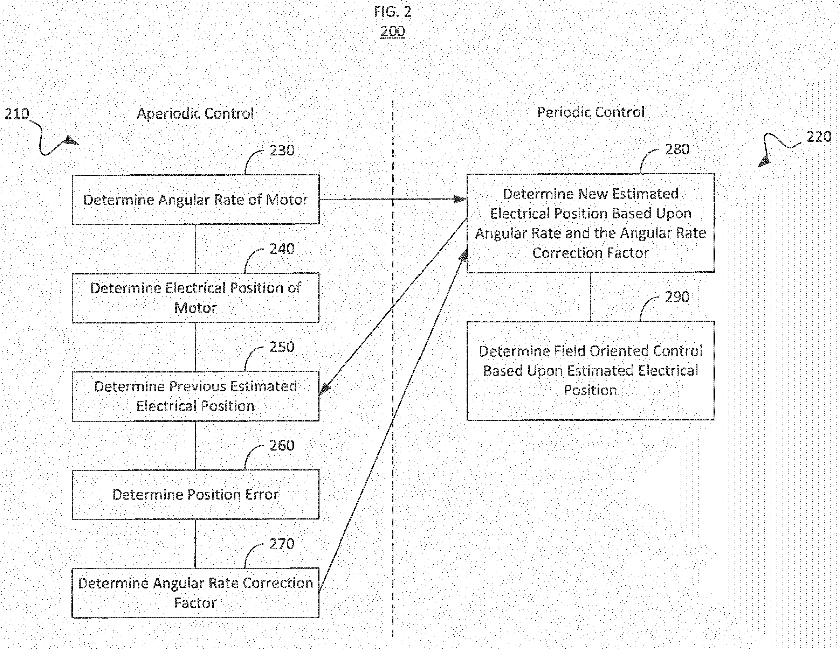

FIG. 2 illustrates a method 200 for controlling a brushless motor 110, in accordance with an embodiment. As seen in FIG. 2, the method includes aperiodic control 210 and periodic control 220.

The aperiodic control 210 includes processes performed by the controller 150 after each Hall effect event, that is, after hall signal transition is detected at each Hall effect sensor 140. As discussed above, a Hall effect event occurs when a Hall effect sensor 140 detects a magnetic pole transition. In the embodiment illustrated in FIG. 1, the aperiodic processes 210 would occur six times per every electrical revolution of the rotor 120. However, the number of aperiodic processes per mechanical revolution or the rotor 120 would change depending upon the number of permanent magnets 125 on the rotor and the number of Hall effect sensors 140 installed on the stator 130. The aperiodic processes are aperiodic as the number of Hall events per second could vary as the angular speed of the rotor 120 changes as the controller 150 generates commands to speed up or slows down the rotor 120. In other words, while the number of Hall effect events per rotation of the rotor 120 is fixed based upon the number of Hall effect sensors 140 and the number of magnets 125, as the rotational speed of the rotor 120 is variable, the frequency of the Hall effect events is also variable, and, thus, aperiodic. However, when the speed of the rotor 120 remains the same, the aperiodic control 210 can occur in a periodic fashion.

The periodic control 220, in contrast, may be performed at fixed intervals. In one embodiment, for example, the periodic processes 220 may be performed at frequency of twenty kilohertz. However, the frequency of the periodic processes 220 can vary depending upon the expected rotational speed of the rotor 120, a desired granularity of control of the rotor 120, and based on the desired bandwidth of the motor current loop. The current loop bandwidth affects the required current loop sample period. The periodic control 220 occurs at a higher frequency than the aperiodic control 210. As discussed in further detail below, the periodic control 220 generates field oriented control commands for the brushless motor 110. As the periodic control commands are generated periodically at a frequency greater than a frequency of the aperiodic control 210 which are performed at each Hall effect event, the control commands are generated multiple times between each Hall effect event, thereby providing fine motor control for the brushless motor 110. Furthermore, the position feedback used for commanding the motor electric field is also updated for every motor control update.

In one embodiment, for example, the periodically generated field oriented control signals may only be sent when a rotational speed of the rotor 120 is above a predetermined threshold. When the rotational speed of the rotor 120 is very low, there may not be enough data points (i.e., Hall events) to effectively determine rotor a fine rotor position between hall sensors. Accordingly, the controller 150 may only use fine rotor position signals for motor control when a frequency of the Hall events is above a threshold. Below the threshold, the controller may use the coarse sixty electrical degree resolution. The threshold will vary depending upon the number of permanent magnets 125 and Hall effect sensors 140 in the system.

The aperiodic processes include determining, by the controller 150, an angular rate of the rotor 120 of the brushless motor 110 at each Hall event. (Step 230). In one embodiment, for example, the controller 150 may determine the angular rate (i.e., speed) of the rotor 120 based upon the time between consecutive Hall events and an angular distance between the one or more Hall effect sensors 140. The controller 150 may store the determined angular rate in the memory 160 for later reference, as discussed in further detail below. One system and method for determining the angular rate of the rotor is described in U.S. Application number 15/622,915, where is incorporated by reference herein.

The controller 150, aperiodically upon each Hall event, also determines an electrical position of the rotor 120 of the brushless motor 110. (Step 240). In the example illustrated in FIG. 1, with only one permanent magnet, the electrical position may be equivalent to a physical position. However, when the brushless motor 110 includes multiple permanent magnets 125, the controller 150 would only know a position of one of the magnets at a Hall event (i.e., that a pole of one of the magnets aligned with a specific one of the Hall effect sensors 140), but not necessarily which of the permanent magnets 125 was aligned with the Hall effect sensor 140. Therefore, the controller would not necessarily know the specific position or orientation of the rotor 120. However, for the purpose of field oriented control, the controller only needs to know the electrical position of the rotor (equivalent to the position of one of the magnets), as the field oriented control signals are based upon the electrical position of the rotor 120.

The controller 150, aperiodically upon each Hall event, determines a previous estimated electrical position of the rotor 120 of the brushless motor 110. (Step 250). As discussed in further detail below, the controller 150 periodically determines an estimated electrical position of the rotor 120 of the brushless motor 110 as part of the periodic control 220 cycle. The estimated position may be stored, for example, in the memory 160 and may be retrieved by the controller 150.

The controller 150, aperiodically upon each Hall event, then determines a electrical position error of the previously estimated electrical position of the rotor 120 determined in Step 250. (Step 260). The electrical position error may be calculated, for example, by determining the difference between the electrical position of the rotor 120 determined in Step 240 and the previously estimated electrical position of the rotor 120 determined in Step 250. (Step 260). In one embodiment, for example, the controller 150 may subtract the previously estimated electrical position of the rotor 120 determined in Step 250 from the electrical position of the rotor 120 determined in Step 240.

The controller 150, aperiodically upon each Hall event, then determines an angular rate correction factor based upon the determined position error. (Step 270). As discussed in further detail below, the controller 150 uses the determined angular rate correction factor when determining an estimated electrical position of the rotor 120 in the periodic control 220. In one embodiment, for example, the controller 150 may determine the angular rate correction factor by multiplying the determined position error from Step 260 with by a predetermined gain. The predetermined gain controls how fast the controller 150 attempts to correct the position error determined in Step 260. The larger the gain, the quicker the controller 150 attempts to correct the determined position error. The controller 150 may store the angular rate correction factor in the memory 160 for later reference, as discussed in further detail below. In one embodiment, for example, the controller 150 may account for field oriented control signals when determining the gain. For example, if the field oriented control signals are speeding up the rotor 120, the controller may increase the gain, either linearly or non-linearly, based upon the rate at which the speed of the rotor is increasing. Likewise, when the field oriented controls are slowing the rotor 120, the controller may reduce the gain, either linearly or non-linearly, based upon the rate at which the speed of the rotor is decreasing.

The periodic control processes 220 include determining, by the controller 150, a new estimated electrical position of the rotor 120 based upon the previously estimated position, the determined angular rate of the motor from Step 230 and the determined angular rate correction factor from Step 270. (Step 280). In one embodiment, for example, the new estimated position is calculated by determining an integral of an angular distance, the angular distance being the distance the rotor 120 would travel over a period of time between Hall effect events, divided by the period of time between Hall effect events (i.e, $\int \frac{\Delta d}{\Delta t} dt$ ). This result is added with the angular rate correction factor from Step 270 to the previously determined estimated electrical position to determine the new estimated electrical position of the rotor 120.

As illustrated in FIG. 2, the electrical position of the motor determined in Step 280 is used in the subsequent aperiodic control process 210. Depending upon the difference in frequency between the aperiodic control 210 and the periodic control 220, multiple electrical position estimations in step 280 may be calculated before a subsequent use of the estimated electrical position to calculate the angular rate correction factor (i.e., Steps 250-270). Accordingly, the controller 150, after calculating a new estimated electrical position of the rotor 120 in Step 280, may save the estimated electrical position in the memory 160 for subsequent retrieval during the next aperiodic control 210 cycle. Likewise, as the angular rate of the rotor 120 and the angular rate correction factor are used to determine the new estimated electrical position, the controller 150, after determining the angular rate in Step 230 and the angular rate correction factor in Step 270, may store the resultant factors in the memory 160 for retrieval during the subsequent periodic control 220 cycle.

The controller 150, or another processor communicatively coupled to the controller 150, then uses this new estimated electrical position to generate a field oriented control signal for controlling the rotor 120. (Step 290). The field oriented control includes instructions for generating a magnetic field based upon the new estimated position calculated from Step 280. The magnetic field, when generated, controls the speed and direction of the rotor 120. In one embodiment, the magnetic field is generated, using the stator coils 135, at a position ninety degrees ahead of the electrical position of the rotor 120.

Accordingly, by accurately estimating the position of the rotor 120 between Hall events, the field oriented controls can more accurately generate the electric field as close to ninety degrees ahead of the electrical position of the rotor 120 as possible.

One benefit of determining the rotor position in this manner is that fine motor control can be achieved using relatively few Hall effect sensors. Furthermore, because the angular rate correction factor determined in Step 270 is used as input to the new electrical position estimation calculation rather than the actual electrical position of the rotor 120 determined in Step 240, the position estimator catches up to the correct electrical position gradually though each flow of the periodic processes 220. This allows for a smooth correction of the field oriented control to the correct electrical position rather than a sudden change, which eliminates torque ripple in the control of the brushless motor 110 often found in traditional brushless motor designs.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

**Claims**

1. A system for controlling a permanent magnet brushless motor, comprising:

   at least one Hall effect sensor mounted proximate to the permanent magnet brushless motor and configured to generate data at each Hall effect event, the Hall effect event comprising a pole of the permanent magnet brushless motor passing one of the at least one Hall effect sensors; and
   a processor communicatively coupled to the at least one Hall effect sensor, the processor configured to:

      determine, aperiodically upon detection of each Hall effect event, a sampled angular rate of the permanent magnet brushless motor;
      determine, aperiodically upon detection of each Hall effect event, a sampled electrical position of the permanent magnet brushless motor;
      determine, aperiodically upon detection of each Hall effect event, a previous estimated electrical position of the permanent magnet brushless motor;
      determine, aperiodically upon detection of each Hall effect event, an electrical position error comprising a difference between the sampled electrical position of the permanent magnet brushless motor and the previous estimated electrical position of the permanent magnet brushless motor;
      determine, aperiodically upon detection of each Hall effect event, an angular rate correction factor comprising the determined electrical position error multiplied by a predetermined gain;
      determine, periodically at a predetermined frequency, a new estimated electrical position of the permanent magnet brushless motor based upon the sampled angular rate of the permanent magnet brushless motor and the determined angular rate correction factor; and
      generate, periodically at the predetermined frequency, a field oriented control signal for the permanent magnet brushless motor based upon the new estimated electrical position of the permanent magnet brushless motor.

2. The system of claim 1, wherein the processor is further configured to determine the new estimated electrical position of the permanent magnet brushless motor by:

   determining an angular distance a rotor of the permanent magnet brushless motor would travel over the predetermined frequency based upon the sampled angular rate of the permanent magnet brushless motor; and
   determined the new estimated electrical position of the permanent magnet brushless motor by adding the determined angular distance and the determined angular rate correction factor to the previous determined estimated electrical position of the permanent magnet brushless motor.

3. The system of claim 1, wherein the predetermined frequency is higher than a frequency of the Hall effect event.

4. The system of claim 1, wherein the gain is linear.

5. The system of claim 1, wherein the gain is non-linear and is based upon the field oriented control signal.

**6.** A method for controlling a permanent magnet brushless motor, comprising:

determining, by a processor, an angular rate of the permanent magnet brushless motor aperiodically at each Hall effect event detected by a Hall effect sensor based upon data from the Hall effect sensor;

determining, by the processor, an angular rate correction factor aperiodically at each Hall effect event detected by the Hall effect sensor based upon the data from the Hall effect sensor;

determining, by the processor, a new estimated electrical position of the permanent magnet brushless motor periodically at a predetermined frequency based upon the determined angular rate of the permanent magnet brushless motor and the determined angular rate correction factor; and

generating, by the processor, a field oriented control signal for the permanent magnet brushless motor based upon the new estimated electrical position of the permanent magnet brushless motor periodically at the predetermined frequency.

**7.** The method of claim 6, further comprising:

determining, by the processor, a sampled electrical position of the permanent magnet brushless motor aperiodically at each Hall effect event detected by the Hall effect sensor.

**8.** The method of claim 7, further comprising:

determining a previous estimated electrical position of the permanent magnet brushless motor aperiodically at each Hall effect event detected by the Hall effect sensor.

**9.** The method of claim 8, further comprising:

determining an electrical position error comprising a difference between the sampled electrical position of the permanent magnet brushless motor and the previous estimated electrical position of the permanent magnet brushless motor aperiodically at each Hall effect event detected by the Hall effect sensor.

**10.** The method of claim 9, further comprising:

determining, by the processor, the angular rate correction factor by multiplying the determined electrical position error by a predetermined gain.

FIG. 1
100

FIG. 2
200

Aperiodic Control | Periodic Control

210

220

230
Determine Angular Rate of Motor

240
Determine Electrical Position of Motor

250
Determine Previous Estimated Electrical Position

260
Determine Position Error

270
Determine Angular Rate Correction Factor

280
Determine New Estimated Electrical Position Based Upon Angular Rate and the Angular Rate Correction Factor

290
Determine Field Oriented Control Based Upon Estimated Electrical Position

EP 3 346 601 A1

9

Europäisches
Patentamt

European
Patent Office

Office européen
des brevets

# EUROPEAN SEARCH REPORT

Application Number

EP 18 15 0384

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2007 052365 A1 (BOSCH GMBH ROBERT [DE]) 7 May 2009 (2009-05-07) * paragraph [0017] - paragraph [0038]; figures 2,4 * | 1-10 | INV.<br>H02P6/17<br>H02K29/08 |
| X | EP 1 874 669 A1 (OTIS ELEVATOR CO [US]) 9 January 2008 (2008-01-09) | 1-10 | |
| Y | * paragraphs [0023], [0038] - [0042], [0048] - [0049]; claim 1; figures 2,5 * | 1-10 | |
| Y | US 6 653 829 B1 (HENRY RASSEM RAGHEB [US] ET AL) 25 November 2003 (2003-11-25) * column 11 - column 12; figure 11 * | 1-10 | |

TECHNICAL FIELDS
SEARCHED     (IPC)

H02P
H02K

The present search report has been drawn up for all claims

| Place of search | Date of completion of the search | Examiner |
|---|---|---|
| Munich | 14 May 2018 | Kruip, Stephan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 15 0384

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2018

| Patent document cited in search report | Publication date | Patent family member(s) | Publication date |
|---|---|---|---|
| DE 102007052365 A1 | 07-05-2009 | DE 102007052365 A1<br>EP 2208025 A2<br>WO 2009056421 A2 | 07-05-2009<br>21-07-2010<br>07-05-2009 |
| EP 1874669 A1 | 09-01-2008 | AT 417017 T<br>EP 1874669 A1<br>ES 2318461 T3<br>WO 2006094524 A1 | 15-12-2008<br>09-01-2008<br>01-05-2009<br>14-09-2006 |
| US 6653829 B1 | 25-11-2003 | US 6653829 B1<br>WO 0120351 A1 | 25-11-2003<br>22-03-2001 |

EPO FORM P0459

For more details about this annex : see Official Journal of the European Patent Office, No. 12/82

**REFERENCES CITED IN THE DESCRIPTION**

**Patent documents cited in the description**

- US 622915 A